# EUROPEAN PATENT SPECIFICATION

(11) **EP 1 554 937 B1**
(45) Date of publication and mention of the grant of the patent: **20.03.2013**
(21) Application number: 04000666.0
(22) Date of filing: 15.01.2004
(51) Int. Cl.: A23K 1/18, A01K 63/04, A01K 61/00

(54) **Aquaculturing system for producing cultured fish using a marine fish feed source comprising copepods**
Aquakulturanlage zur Züchtung von Fischen unter Verwendung einer Fischfutterquelle enthaltend Kopepoden.
Système d'aquaculture pour la culture de poissons utilisant une source d'aliments pour poissons comprenant des copepods

(43) Date of publication of application: 20.07.2005
(73) Proprietor: AKVA group Denmark A/S, 7000 Fredericia (DK)
(72) Inventor: Urup, Bent, 7000 Fredericia (DK)
(74) Representative: Tellefsen, Jens J.

(56) References cited:
- US-A- 4 213 421
- US-A- 5 820 759
- STOTTRUP, J. G.: "The elusive copepods: their production and suitability in marine aquaculture" AQUACULTURE RESEARCH, vol. 31, 2000, pages 703-711, XP002291005 GBBLACKWELL SCIENCE, OXFORD,
- LILTVED, H., AND CRIPPS, S. J.: "Removal of particle-associated bacteria by prefiltration and ultraviolet irradiation" AQUACULTURE RESEARCH, vol. 30, 1999, pages 445-450, XP002291006 GBBLACKWELL SCIENCE, OXFORD,

## Description

### Scope of the invention

The present invention relates to a method for producing a marine fish feed source comprising copepods.

Furthermore, the present invention relates to a method for feeding fish larvae with a marine fish feed source.

Furthermore, the present invention relates to an aquaculturing system for producing cultured fish by using a marine fish feed source.

### Background of the invention

Unlike fish larvae of freshwater fish species, marine fish larvae are not able to synthesise a number of essential fatty acids and amino acids. Furthermore, some marine fish larvae are dependent on micro algae feeding when they initiate feeding. In addition, a number of other problems regarding high sensitivity to very low ammonia levels, feed densities etc. exits. All these factors make culturing of fish larvae/fry of certain marine fish species a difficult task.

A number of the particularly difficult marine fish species feed on copepods in nature. Copepods are a subclass of crustaceans.

It would be natural to use these animals as feed for marine fish larvae and also for aquaculture, but the problem is that these animals are the principal carriers of many fish parasites as the copepods act as an intermediary host, and the efforts in using copepods collected from their natural environment have never proven successful as production success varies too much due to infections in the fish larvae culture, and further the supply from the catches is often too unstable.

Aqua Culture Research, 1999, 30, 445-450 is an article relating to removal of particle-associated bacteria. This article discloses bacteria removal by a system comprising combined filtration and UV-irradiation. A reduction of 5 log₁₀ units in viable count was obtained by this system. The system is useful for bacteria reduction for use in aquaculturing systems.

Especially in Norway, an alternative to the catch of wild copepods is applied. Instead of catching the copepods directly from the open sea, an enclosure of typically a few hectares is separated from the sea by a dam or a similar device. The fish within the enclosure are removed to reduce the infection level of the copepods.

Subsequently, the copepods are caught in this so-called "poll" and placed in large plastic bags which are left hanging in the "poll". This is more efficient than simply collecting the copepods from the sea. However, the method does not provide stability in the production and only small amounts of fry are produced using this method.

Diseases are still a problem, and it is still difficult to control the feed densities in the bags. Furthermore, the fish can only be cultured when the temperature in the pond is optimal for the larvae.

Aqua Cultural Research, 2000, 31, 703-711 is an article reviewing the use of copepods in marine aqua culture. This article discloses an aquaculture system of the above kind. Furthermore, this review discloses another system in which six outdoor ponds are used. The ponds are kept empty during the winter and are filled with filtered salt water before the introduction of first feeding fish larvae. During this period, natural phyto- and zoo-plankton are monitored daily. The first-feeding larvae are introduced with an increasing production of zoo-plankton nauplii and ample supply of algae. One of the ponds is reserved exclusively for copepod production.

The two systems disclosed in Aqua Culture Research, 2000, 31, 703-711 accordingly both comprise at least one tank comprising copepods having reached different live stages.

Today nearly all hatcheries use a technology where Rotifers and Artemia are used as feed for the marine larvae. In this technology a culture of Rotifers is fed to the fish larvae in the early stages of first feeding. Later on the hatcheries switch to the brine shrimp Artemia which can be bought as egg-cysts and which are then hatched and fed to the fish larvae.

The problem with these animals is that they are not born with the right composition of fatty acids and amino acids for some marine fish larvae, and therefore especially a few years ago problems arose with mal-pigmentation, deformities and a variation of growth rate within a batch of fish. Today these problems have for some species of fish partly been overcome by development of enrichment programs for the Rotifers and Artemia.

Still there is some variation in the growth rate, and the immune response system to diseases is usually not as desired. Another problem is that the bacterial stability in these production systems is not very high which causes a lot of problems for the fish larvae. Hence, to obtain high larvae survival in these systems, it is usually necessary to use antibiotics and chemicals to defeat disease problems, although most hatcheries are very secretive about it.

In the early nineties Dr. Bent Urup developed a method for culturing calanoide copepods in relatively large amounts on land in large closed outdoor tanks, in order to obtain a completely infection free culture/supply of copepods.

While culturing these copepods in big tanks, the fish larvae were added directly to some of the copepod culture tanks, where algae, copepods and fish larvae were grown simultaneously. The method produced fish larvae of high quality as regards deformities, uniform growth and immune response to diseases.

The key problem with this technology is that a hatchery operating with this technology is only capable of producing a relatively low quantity of fish. Ten years ago this would have been fine, but today this quantity is not sufficient for a hatchery to be competitive. Only a limited number of fish larvae can be added to the copepod culture tank, as the feed requirement of the larvae has to be in balance with the copepod production within the tank even at peak consumption.

Furthermore, as the copepods have to be grown in large outdoor tanks, where it is not possible to control the temperature, the production can only take place during a few months of the year as the fish larvae are very dependent on the temperature. Therefore this technology does not allow sufficient culturing of fish fry for a hatchery to be competitive today. Even a small production of 1 million fish fry will require minimum 10.000 m² hatchery space.

### Object of the invention

Accordingly, in the field of aquaculture a need for a marine fish source, which is useful for feeding fish larvae and which does not suffer from the above problems, exists. Furthermore, an efficient process for feeding fish larvae is needed.

It is the object of the present invention to provide an aquaculturing system with optimal growth conditions, including a bacterial stable environment and where a marine fish feed source comprising copepods is produced and used to feed fish larvae, whereby the survival rate of the fish larvae is increased significantly.

This can be achieved with an aquaculturing system according to claim 7, where said system comprises a number of containers comprising said fish larvae and the water in each of said containers is filtered by leading water from said container through a bio-filter system and by returning the filtered water to one or more of said containers, whereby the containers are supplied with new non-pathogen bacteria, and whereby toxic ammonia products are removed from the containers, and wherein said copepods are used as fish feed in a specific fish larvae container so as to ensure that said fish larvae in said specific fish larvae container are fed with copepods having reached a life stage and/or size which is suitable for feeding said specific fish larvae.

It is a further object of the present invention to provide a method for producing a marine fish feed source comprising copepods.

This can be achieved with a method according to the preamble of claim 1 and wherein an algae culture is grown in seawater in a tank, said seawater is being filtered to 50 micron or less so as to remove essentially any presence of zoo-plankton, said copepods are ready for breeding and added to said tank, a number of nutrients are added to said tank in order to keep said algae culture in growth so as to prevent the collapse of said algae culture, and said algae culture is maintained in balance when a desired steady state level has been reached by controlling the density of said copepod by harvesting excess amounts of said copepods and/or by controlling the nitrogen content in said tank.

It is yet a further object of the present invention to provide a method for feeding fish larvae with a marine fish feed source.

This can be achieved with a method according to the preamble of claim 3 wherein said fish larvae are placed in a larvae feeding tank. Copepods in said marine fish feed source having a specific size range in relation to said fish larvae are added to said larvae feeding tank in order to obtain a suitable density of said copepods in said larvae feeding tank, said algae culture is added to said larvae feeding tank around first feeding to secure that the density of said algae culture will be suitable for maintaining optimal feeding conditions for said copepods and satisfy requirements regarding larvae algae feeding. The water in said larvae feeding tank is filtered by leading said water from said larvae feeding tank through a bio-filter system and by returning the filtered water to said larvae feeding tank, whereby said larvae feeding tanks are supplied with new non-pathogen bacteria, and toxic ammonia products are removed from said larvae feeding tank, and the oxygen level in said fish larvae tank is maintained at levels between 80 and 110 % saturation.

### Description of the invention

It should be noted that in the present application the term "copepods" will be used to denote an animal of the copepod-class, regardless the specific life stage of said animal. Thus, the life stages naupli, copepodits and copepods will also be referred to as "copepods".

The copepods are preferably cultured in large outdoor tanks of a size in the range of 1000-3500 m³/tank. Preferably local species of the copepods are used, which may simply be collected in the nearby sea and the production schedule will then be optimised for this specie, however, also other species than local species of copepods are contemplated for use in the process according to this first aspect of the present invention. The most preferred species belong to the order of Calanoida and Cyclopoida.

Once the specie is adapted to culture, and the management regime is adjusted to the specie, the production can start.

By maintaining the algae culture in balance in the fish feed source, it is possible to maintain a source of copepods for an extended period of time. Usually a culture of copepods can be maintained in a tank for a period of 4-12 weeks whereupon it is necessary to empty and clean the tank. Subsequently, a new culture may be started.

Accordingly, when a continuous supply or source of copepods is desired it is necessary to provide more than one tank. Thus, it is practical to provide two to six tanks, e.g. three, four or five tanks. When a tank/container with a copepod culture has been finished, it will be seeded with copepods from one of the two or more other tanks, with a new first generation of just premature copepods.

In the case, where more than one tank is provided, each tank should be started up with 1-3 weeks interval. This will ensure that a continuous supply of copepod is provided. This implies that the copepod culture is reproduced in 2-6 generations in each container/tank before the container is emptied and the culture restarted.

When a batch is started, the first thing to do, after the tank has been cleaned, is to start up an algae culture in the copepod culture tank on filtered sea water, which is being filtered to 50 micron or less to remove essentially any presence of zoo-plankton.

The algae culture type to be used may be any type of algae culture, however, it is preferred to use an algae culture mixture which is naturally present at the location of production or is a natural habitant in the sea, where the specific species of copepods used are found.

As the algae culture starts growing, copepods which are ready for breeding are added to the copepod tank with the now growing algae culture.

Until the copepod population reaches a density where the predation on the algae will match the algae growth, the algae should be kept in a continuous growth, without a collapse of the culture. The continuous growth is ensured by means of gradually adding more nutrients through addition of new inlet seawater and addition of pure nutrients if required.

A parameter usable for controlling the growth of the algae is the nitrate content in the water. It is favourable to have nitrate content in the water corresponding to 15 - 40 micrograms nitrogen. Such a concentration of nitrate will boost the growth of algae having a size in the range 5-20 micron which is the size range digestible to copepods.

When the copepod population has increased in density, so that a desired steady state level is reached, where a balance between the algae growth in the tanks, and the algae produced in the tank is obtained, the culture is maintained in balance by controlling the copepod density to avoid over-exploiting of the algae culture by harvesting out excess amounts of copepods. It is preferred that the steady state level is not reached until the algae concentration is minimum 350 micrograms dry weight per litre.

The algae growth on the other hand is controlled and maintained through nitrogen control. The nitrogen inputs partly come from nitrogen which is regenerated within the tank through re-mineralization of algae biomass as it is eaten by the copepods and returns to the water volume as faeces whereupon it is mineralized through bacterial activity, and optionally by addition of inlet water, in the form of natural content of nitrogen (ammonia and nitrate) in the inlet seawater, or directly to the tank as a liquid or powder in any other nitrogen-rich form.

The harvested copepods are then graded in different size groups from 50 - 1000 micron. The harvesting of the copepods may be performed by using a filter which allows selection of copepods of a specific size range.

To be able to increase the production capacity of a single hatchery which uses a copepod producing technology according to the present invention, said fish feed sources comprising an array of said fish feed sources and each of said fish feed sources in terms of the start-up time is separated in relation to the other of said fish feed sources.

The array of said fish feed sources and the controlled growth condition ensures that it is possible to culture copepods continually throughout the year, which could increase the production from a maximum of approximately 1 million fry per year to 30 million fry per year. Obviously, this means a serious reduction of the fry production costs.

The fish larvae are placed in a larvae feeding tank, and said fish larvae are selected from the species, which in the larvae stage are incapable of synthesizing the fatty acid 22:6n-3, and said species are dependent on small live prey less than 700 micron in said larvae stage.

The fish larvae have a minimum age of one day after hatching and a maximum weight of approximately 10 mg dry weight and is selected from the species: Senegal sole (*Solea Senegalensis),* Common sole *(Solea Solea),* Japanese flounder (*Paralichthys olivaceus),* Chilian flounder *(Paralichthys microps*), Merluza (*Merluccius merluccius, Merluccius gayi, Merluccius senegalensis, Merluccius Paradoxus*), Cod (*Gadus Mor-hua*), Mahi Mahi (*Coryphaena hippurus*), Bluefin tuna (*Thunnus thynnus*), Yellow fin tuna (*Thunnus albacares*), Big eye tuna (*Thunnus obesus*), Groupers (*Epinephelus spp., Plectropomus spp. and serranidae spp.*), Humpback grouper (*Cromileptes altivelis),* Homphead wrasse *(Cheilinus undulates),* Atlantic halibut (*hippoglossus hippoglossus).*

The optimal size range of copepods is then added to the larvae feeding tank to obtain a prey density optimal to the fish larvae, and at the same time algae are added to keep a balance also within the larvae feeding tank, which is not dependent on the interactions between copepods, algae and fish larvae, but only on the input levels, but where the same proportions are maintained which will secure that the algae density will be suitable for maintaining satisfying feeding conditions for the copepods, and a prey density (different copepod stages) which is optimal to the fish larvae.

This means that an optimal copepod density regarding larvae feed density can be obtained, unlike if the copepod density had to be in steady balance with the algae production.

The marine feed source is added to the larvae feeding tank in order to obtain a copepod density, which is essentially optimal for the fish larvae in the larvae feeding tank.

See below for tables regarding the relations between larva size/copepods size and larva size/density of copepods.

| Larvae size | Copepod size |
|---|---|
| mg dry weight | micron |
| 0.4 | 50-120 |
| 0.6 | 80-120 |
| 0.9 | 80-250 |
| 1.8 | 120-250 |
| 3.0 | 120-250 |
| 4.5 | 120-800 |
| 6.0 | 250-800 |
| 7.5 | 250-800 |
| 9.0 | 500-800 |

| Larvae size | Density of copepod |
|---|---|
| mg. dry weight | prey items per litre |
| Up to 0.9 | 50-600 |
| 1.2-7.5 | 10-100 |

Algae, either cultured algae species including Isochrysis sp. or a mix of algae from an algae bloom 3 - 7 days old obtained in a container on filtered seawater, initially containing a mix of natural local micro algae species, are added to the larvae feeding tank around first feeding to secure that the algae density is suitable for maintaining feeding conditions for the copepods, and satisfy requirements regarding larvae algae feeding.

During algae addition, the algae density in the first feeding tanks, will be maintained at levels between 3x10⁴ - 3x10⁵ algae cells, or levels up to max 550 my gram dry weight algae per litre, between 1 day before first feeding and up to day 7 after first feeding.

The bacterial stability is very important for the survival of the larvae, at least if the fish larvae are to be cultured without use of chemicals and antibiotics. In this new technology bacterial stability is obtained by using a bio-filter system.

The bacterial stability is controlled by using a bio-filter system, which continually feeds the tanks with new non-pathogen bacteria, which is selected from the group comprising heterotrophic and nitrifying bacteria, to out-compete potentially pathogen bacteria within the larvae tanks, and at the same time the bio-filter removes toxic ammonia products from the larvae culture tank. The water is recycled between the fish tanks and the bio-filter.

To reduce costs the fish larvae have to be adverse to dry feeding, thus said method comprises the additionally step of removing said fish larvae from said larvae feeding tank for further feeding, such as e.g. dry feeding when said fish larvae have a size and/or age allowing such feeding.

In the period from the egg's hatch and the yolk sac is fully absorbed, the fish larvae are transferred to the larvae tanks (first feeding tanks), each 5-30 m³. Here they live in a stable environment maintained by the treatment of the water in the bio-filter, and addition of algae culture, plus different stages of copepods (copepods, copepodits and naupli), plus supplements of Rotifers and Artemia.

As the larvae grow, the size group of Copepods will gradually be increased, and potentially dry feed can be added directly to the first feeding tank, when the larvae are almost fully ready to be weaned to dry feed.

The aquaculturing system for producing cultured fish by using a marine fish feed source comprising copepods, comprises a number of containers with fish larvae,

The bacterial stability is obtained by filtering the water in each of said containers by leading water from said container through a bio-filter system and by returning the filtered water to one or more of said containers.

The bio-filter supplies the containers with new non-pathogen bacteria, to out-compete potentially pathogen bacteria within the larvae tanks, and at the same time the bio-filter removes toxic ammonia from the containers.

The marine fish feed comprising copepods is harvested and fed to fish larvae in a specific fish larvae container so as to ensure that said fish larvae in said specific fish larvae container are fed with copepods having reached a life stage and/or size, which is suitable for feeding said specific fish larvae.

The present invention can be used for fish larvae from day one after hatch until the larvae reach a size of approx 70 mg and no longer rely on live prey.

Rotifers and Artemia can be used as a cheap food supplement mainly to cover energy requirements, and copepods can be used principally to cover critical amounts regarding nutritional requirements and therefore comprises said aquaculturing system and systems for adding Rotifers and Artemia.

To obtain bacterial stability in the aquaculturing system said bio-filter is structured so that said water will be able to pass through a media, with a surface area of more than 50 m² per m³ on which media a bacterial film consisting of heterotrophic and nitrifying bacteria is attached, and said bio-filter is provided with a screen for removing particles of a size bigger than 50 micron before said water re-entering said larvae feeding tank.

The bio-filter will maintain the level of on-ionised ammonia in the return flow to the larvae feeding tank below 0.02 mg (nitrogen) per litre.

### Examples

The following examples are intended to further illustration of the present invention. They should, however, not be construed as limiting the present invention in any way.

### Example 1: Production of the calanoid copepod Acartia clausi

A copepod culture container/tank is filled with seawater filtered to avoid any zooplankton coming in, and the algae in the tanks, if any, alternatively some are added, are left to grow until a steady state level is reached. Then a mix of wild copepods is seeded to the tank. The nitrogen concentration is monitored and controlled to provide optimal growth condition for the algae.

The population of copepods are followed in the tank, and when a dominant part of the Acartia fraction of the copepods, have reached a size just before maturity, the culture volume is screened through minimum 2 screens, sized so that the just premature copepods can be separated. The bigger ones will be trapped by the bigger screen, and the copepods smaller than the ones wanted, will pass through the filter screen which will hold back the copepods wanted.

The sample of just premature copepods is then separated and seeded to another tank. This time the Acartia copepods seeded to the tank, will start spawning almost at the same time as those seeded at the same development stage.

When the first batch of naupli from this second tank grow to the copepodit stage and reach a premature stage, the group of premature copepods will be separated and stocked into a third tank again and the copepod culture will be almost clean.

From this third generation tank, from the first bulk of premature "domesticated" copepods, the first copepod culture tanks will be stocked.

From now on the culturing of the copepods can be controlled by always selecting out the premature copepods from the first big spawning, for the next culture tank. Furthermore, the generation time will over time be shortened, by always selecting the fastest growing individuals of the first batch in the new copepod production tank.

To perform successfully the algae levels have to be maintained at minimum 350 my gram dry weight per litre, and nitrogen content in the water corresponding to 15 - 40 micrograms nitrogen, and copepods are controlled in concentration by harvesting out excess amount to maintain a steady state balance.

### Example 2 - Feeding of cod larvae

A fish larvae feed tank is filled with seawater, and algae levels are adjusted. Cod larvae hatched one day earlier are transferred to the tank, feed levels and algae levels are maintained at levels according to claim 40. From day 7 or earlier if ammonia levels are reaching levels close to 0.02 mg NH₃ (N), the tank is connected to the bio-filter system, and the flow from the individual tank to the bio-filter system is gradually increased, as to maintain levels of NH₃ in the fish larvae feed tank below 0.02 mg NH₃ (N). Oxygen is through the entire production phase adjusted at levels between 80% and 110% saturation.

When the fish larvae reach a size between 4, 5 and 12 mg, dry weight feeding with dry feed is initiated, and either right before or right after, they are transferred to other tanks, separated from the larvae feed tank system.

### Description of the drawing

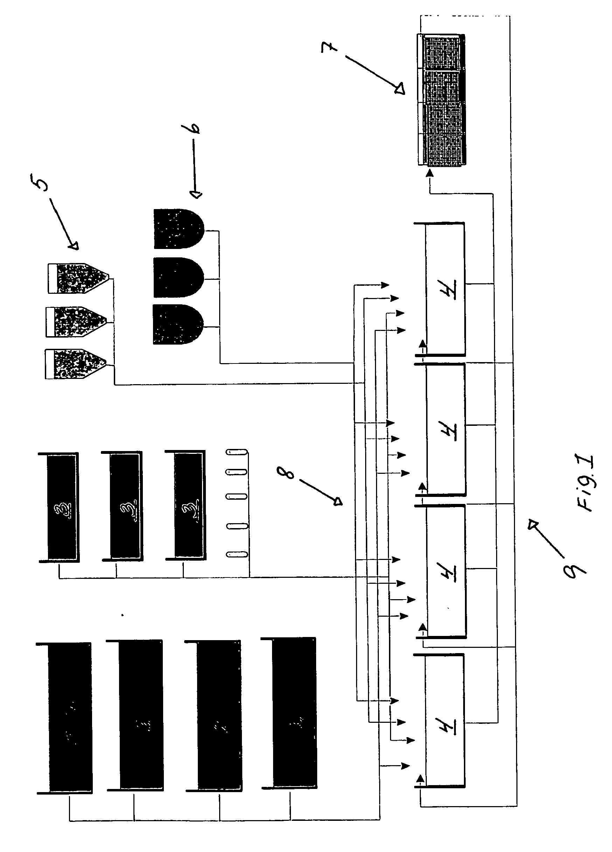

The invention is described below with reference to the accompanying drawing in which fig. 1 shows a schematic overview of an aquaculturing system according to the invention, wherein an aquaculturing system 1 comprises:
- four tanks 2 for producing copepod cultures,
- tree tanks 3 for producing algae cultures,
- separate systems 5, 6 for adding Artemia and Rotifers,
- four larvae feeding tanks 4, wherein fish larvae are kept in sea water added with copepod and algae and/or Artemia and Rotifers.

The bacterial stability in the larvae feeding tank 4 is maintained by circulating the water through bio-filter 7 by pipe system 9.

The pipe systems 8 between the different tank systems and the larvae feeding tanks 4 provide the possibility to lead e.g. copepods from the upper tank 2a to every larvae feeding tank 4, whereby it is a possibility to continuously produce copepods of suitable size/age and feed them to the fish larvae of a specific size/age regardless of the life cycles of the copepods or fish larvae.

## Claims

1. Method for producing a marine fish feed source comprising copepods, **characterised in that**
- an algae culture is grown in seawater in a tank, said seawater is being filtered to 50 micron or less so as to remove essentially any presence of zoo-plankton,
- said copepods are ready for breeding and added to said tank,
- a number of nutrients are added to said tank in order to keep said algae culture in growth so as to prevent the collapse of said algae culture, and
- said algae culture is maintained in balance when a desired steady state level has been reached by controlling the density of said copepod by harvesting excess amounts of said copepods and/or by controlling the nitrogen content in said tank.

2. Method according to claim 1, **characterised in that** said nutrients are either added by addition of inlet water, in the form of natural content of nitrogen (ammonia and nitrate) in said inlet seawater, or directly to the tank as a liquid or powder in any other nitrogen rich form.

3. Method for feeding fish larvae with a marine fish feed source obtainable by any of the preceding claims, **characterised in that**
- said fish larvae are placed in a larvae feeding tank,
- said copepods in said marine fish feed source having a size range in relation to said fish larvae are added to said larvae feeding tank in order to obtain a suitable density of said copepods in said larvae feeding tank,
- said algae culture is added to said larvae feeding tank around first feeding to secure that the density of said algae culture is suitable for maintaining optimal feeding conditions for said copepods and satisfy requirements regarding larvae algae,
- said water in said larvae feeding tank is filtered by leading said water from said larvae feeding tank through a bio-filter system and by returning the filtered water to said larvae feeding tank, whereby said larvae feeding tanks are supplied with new non-pathogen bacteria, and toxic ammonia products are removed from said larvae feeding tank and the nitrogen content is controlled in said tank, and
- the oxygen level in said fish larvae tank is maintained at levels between 80 and 110 % saturation.

4. Method according to claim 3, **characterised in that** said fish larvae are selected from fish species; which in the larvae stage are incapable of synthesizing the fatty acid 22:6n-3, and are depending on small live prey less than 700 micron.

5. Method according to claims 3-4, **characterised in that** said fish larvae have a minimum age of one day after hatching and a maximum weight of approximately 10 mg dry weight.

6. Method according to claims 3-4, **characterised in that** said method furthermore comprising the additionally step of removing said fish larvae from said larvae feeding tank for further feeding, such as e.g. dry feeding when said fish larvae have a size and/or age allowing such feeding.

7. Aquaculturing system for producing cultured fish by using a marine fish feed source comprising copepods, wherein
- an algae culture is grown in seawater in a tank, said seawater is being filtered to 50 micron or less so as to remove essentially any presence of zoo-plankton,
- said copepods are ready for breeding and added to said tank,
- a number of nutrients are added to said tank in order to keep said algae culture in growth so as to prevent the collapse of said algae culture, and
- said algae culture is maintained in balance when a desired steady state level has been reached by controlling the density of said copepod by harvesting excess amounts of said copepods and/or by controlling the nitrogen content in said tank, and where said nutrients are either added by addition of inlet water, in the form of natural content of nitrogen (ammonia and nitrate) in said inlet seawater, or directly to the tank as a liquid or powder in any other nitrogen rich form where said marine fish feed source is obtained by an array of fish feed sources and each of said fish feed source in terms of the start-up time is separated in relation to the other of said fish feed sources, and where said fish larvae are fed with said marine fish feed source, obtained by a method for feeding fish larvae with a marine fish feed source, wherein
- said fish larvae are placed in a larvae feeding tank,
- said copepods in said marine fish feed source having a size range in relation to said fish larvae are added to said larvae feeding tank in order to obtain a suitable density of said copepods in said larvae feeding tank,
- said algae culture is added to said larvae feeding tank around first feeding to secure that the density of said algae culture is suitable for maintaining optimal feeding conditions for said copepods and satisfy requirements regarding larvae algae,
- said water in said larvae feeding tank is filtered by leading said water from said larvae feeding tank through a bio-filter system and by returning the filtered water to said larvae feeding tank, whereby said larvae feeding tanks are supplied with new non-pathogen bacteria, and toxic ammonia products are removed from said larvae feeding tank, and
- the oxygen level in said fish larvae tank is maintained at levels between 80 and 110 % saturation, where said system comprises a number of containers comprising said fish larvae, each of said containers comprising fish larvae and the water in each of said containers is filtered by leading water from said container through a bio-filter system and by returning the filtered water to one or more of said containers, whereby the containers are supplied with new non-pathogen bacteria, and whereby toxic ammonia products are removed from containers, and wherein said copepods are used as marine fish feed in a specific fish larvae container so as to ensure that said fish larvae in said specific fish larvae container are fed with copepods having reached a life stage and/or size which is suitable for feeding said specific fish larvae.

8. Aquaculturing system according to claim 7, **characterised in that** said system furthermore comprises systems for adding Rotifers and Artemia

9. Aquaculturing system according to claims 7-8, **characterised in that** said bio-filter is structured so that said water will be able to pass through a media, with a surface area of more than 50 m² per m³ on which media a bacterial film consisting of heterotrophic and nitrifying bacteria is attached, and said bio-filter is provided with a screen for removing particles of a size bigger than 50 micron before said water re-entering said larvae feeding tank.

## Patentansprüche

1. Verfahren zur Produktion einer Meeresfischfutterquelle bestehend aus Ruderfusskrebsen, **dadurch gekennzeichnet, dass**
- eine Algenkultur in Meereswasser in einem Tank gezüchtet wird, wobei besagtes Meereswasser auf 50µm oder weniger gefiltert wird, um im Wesentlichen jegliche Präsenz von Zooplankton zu entfernen,
- die besagten Ruderfusskrebse bereit für die Aufzucht sind und zu besagtem Tank hinzugefügt werden,
- eine Anzahl an Nährstoffen zu besagtem Tank hinzugefügt werden, um besagte Algenkultur am Wachstum zu halten, um den Zusammenbruch der besagten Algenkultur zu verhindern, und,
- die besagte Algenkultur in Balance gehalten wird, wenn ein gewünschter Gleichgewichtslevel durch die Kontrolle der Dichte der besagten Ruderfusskrebse durch die Ernte überschüssiger Mengen besagter Ruderfusskrebse und/oder durch die Kontrolle des Stickstoffgehalts in besagtem Tank erreicht worden ist.

2. Verfahren nach Anspruch 1, **dadurch gekennzeichnet, dass** die besagten Nährstoffe entweder durch die Hinzufügung des Einlasswassers, in der Form eines natürlichen Gehaltes an Stickstoff (Ammonium und Nitrat) in besagtem Einlassmeerwassers, oder direkt zum Tank als eine Flüssigkeit oder Pulver in jeglicher anderer stickstoffreichen Form hinzugefügt werden.

3. Verfahren für das Füttern von Fischlarven mit einer Meeresfischfutterquelle beziehbar durch jegliche der vorgehenden Ansprüche, **dadurch gekennzeichnet, dass**
- die besagten Fischlarven in einen Larven Futtertank platziert werden,
- die besagten Ruderfusskrebse in besagter Meeresfischfutterquelle, die einen Grössenbereich in Bezug auf besagte Fischlarven haben, zu besagtem Larvenfuttertank hinzugefügt werden, um eine geeignete Dichte an besagten Flussfusskrebsen in besagtem Larvenfuttertank zu erhalten,
- die besagte Algenkultur zum besagten Larvenfuttertank während der ersten Fütterung hinzugefügt wird, um sicherzustellen, dass die Dichte der besagten Algenkultur geeignet ist, um die optimale Fütterbedingungen für besagte Ruderfusskrebse beizubehalten, und den Anforderungen bezüglich den Larvenalgen zu genügen,
- das besagte Wasser im besagtem Larvenfüttertank durch das Hindurchleiten des besagten Wassers von besagtem Larvenfüttertank durch ein Biofiltersystem und durch die Zurückführung des gefilterten Wassers zu besagtem Larvenfüttertank gefiltert wird, wobei die besagten Larvenfüttertanks mit neuen nicht-pathogenen Bakterien beschickt werden, und giftige Ammoniumprodukte von dem besagten Larvenfüttertank entfernt werden und der Stickstoffgehalt in besagtem Tank kontrolliert wird, und
- der Sauerstofflevel im besagten Fischlarventank bei Levels zwischen 80 und 110% Sättigung gehalten wird.

4. Verfahren nach Anspruch 3, **dadurch gekennzeichnet, dass** besagte Fischlarven von Fischspezies ausgewählt werden; welche im Larvenstadium ausserstande sind, die Fettsäure 22:6n-3 zu synthetisieren, und von kleiner lebender Beute weniger als 700 µm abhängen.

5. Verfahren nach Ansprüchen 3-4, **dadurch gekennzeichnet, dass** besagte Fischlarven ein Mindestalter von einem Tag nach dem Schlüpfen und ein Maximalgewicht von ungefähr 10 mg Trockengewicht haben.

6. Verfahren nach Ansprüchen 3-4, **dadurch gekennzeichnet, dass** besagtes Verfahren des Weiteren den zusätzlichen Schritt des Entfernens besagter Fischlarven aus dem besagten Larvenfüttertank für das weitere Füttern umfasst, wie z. Bsp. die Trockenfütterung, wenn besagte Fischlarven eine Grösse und/oder Alter haben, die solch eine Fütterung zulassen.

7. Ein Aquakultursystem zur Produktion von kultiviertem Fisch durch den Gebrauch einer Meeresfischfutterquelle, die Ruderfusskrebse umfasst, wobei
- eine Algenkultur in Meereswasser in einem Tank gezüchtet wird, wobei besagtes Meereswasser bei 50µm oder weniger gefiltert wird, um im Wesentlichen jegliche Präsenz von Zooplankton zu entfernen,
- besagte Ruderfusskrebse bereit für die Fütterung sind und zu besagtem Tank hinzugefügt werden,
- eine Anzahl an Nährstoffen zu besagtem Tank hinzugefügt werden, um besagte Algenkultur am Wachstum zu halten, um den Kollaps der besagten Algenkultur zu verhindern, und
- die besagte Algenkultur in Balance gehalten wird, wenn ein gewünschter Gleichgewichtslevel durch die Kontrolle der Dichte der besagten Ruderfusskrebse durch die Ernte überschüssiger Mengen besagter Ruderfusskrebse und/oder durch die Kontrolle des Stickstoffgehalts in besagtem Tank erreicht worden ist, und wobei besagte Nährstoffe entweder durch die Hinzufügung des Einlasswassers, in der Form eines natürlichen Gehaltes an Stickstoff (Ammonium und Nitrat) in besagtem Einlassmeerwassers, oder direkt zum Tank als eine Flüssigkeit oder Pulver in jeglicher anderer stickstoffreicher Form hinzugefügt werden, wobei besagte Meeresfischfutterquelle durch eine Reihe an Fischfütterquellen erhalten wird und jede dieser besagten Fischfütterquellen bezüglich der Anfahrzeit in Bezug auf die anderen der besagten Fischfütterquellen getrennt wird, und wobei besagte Fischlarven mit besagter Meeresfischfutterquelle gefüttert werden, die durch ein Verfahren für die Fütterung der Fischlarven mit einer Meeresfischfutterquelle erhalten werden, wobei
- die besagten Fischlarven in einen Larvenfüttertank platziert werden,
- die besagten Ruderfusskrebse in besagter Meeresfischfutterquelle, die einen Grössenbereich in Bezug auf besagte Fischlarven haben, zum besagten Larvenfüttertank hinzugefügt werden, um eine geeignete Dichte an besagten Ruderfusskrebsen im besagten Larvenfüttertank zu erhalten,
- die besagte Algenkultur zu besagtem Larvenfüttertank während der ersten Fütterung hinzugefügt wird, um sicherzustellen, dass die Dichte der besagten Algenkultur für die Beibehaltung der optimalen Fütterbedingungen für besagte Ruderfusskrebse geeignet ist, und um den Anforderungen der Larvenalgen zu genügen,
- das besagte Wasser im besagtem Larvenfüttertank durch das Hindurchleiten des besagten Wassers von besagtem Larvenfüttertank durch ein Biofiltersystem und durch die Zurückführung des gefilterten Wassers zu besagtem Larvenfüttertank gefiltert wird, wobei die besagten Larvenfüttertanks mit neuen nicht-pathogenen Bakterien beschickt werden, und giftige Ammoniumprodukte von dem besagten Larvenfüttertank entfernt werden, und
- der Sauerstofflevel im besagten Fischlarventank bei Levels zwischen 80 und 110% Sättigung beibehalten werden, wobei besagtes System eine Zahl an Behältern umfasst, die besagte Fischlarven umfassen, wobei jede dieser besagten Behälter Fischlarven umfassen und das Wasser in jedem der besagten Behälter durch das Ausführen von Wasser von besagtem Behälter durch ein Biofiltersystem und durch die Zurückführung des gefilterten Wassers zu einem oder mehrerer der besagten Behälter gefiltert wird, wobei die Behälter mit neuen nicht-pathogenen Bakterien beschickt werden und wobei giftige Ammonium Produkte von den Behältern entfernt werden, und wobei besagte Ruderfusskrebse als ein Meeresfischfutter in einem spezifischen Fischlarvenbehälter benützt werden, um sicherzustellen, dass die besagten Fischlarven in besagtem spezifischen Fischlarvenbehälter mit Ruderfusskrebsen gefüttert werden, die eine Lebensstufe und/oder Grösse erreicht haben, die dazu geeignet sind, besagte spezifische Fischlarven zu füttern.

8. Aquakultursystem nach Anspruch 7, **dadurch gekennzeichnet, dass** besagtes System des Weiteren Systeme für die Hinzufügung von Rädertierchen und Salinenkrebsen umfasst.

9. Aquakultursystem nach den Ansprüchen 7-8, **dadurch gekennzeichnet, dass** der besagte Biofilter strukturiert ist, sodass das besagte Wasser durch ein Medium mit einer Oberfläche von mehr als 50 m² pro m³ passieren kann, auf welchem Medium ein bakterieller Film von heterotrophen und nitrierenden Bakterien angebracht ist, und der besagte Biofilter mit einem Schirm für die Entfernung von Partikeln von der Grösse grösser als 50µm ausgestattet ist, bevor das besagte Wasser wieder in den besagten Larvenfüttertank eintritt.

## Revendications

1. Procédé de fabrication d'une source de fourrage pour poisson marin comprenant des copépodes, **caractérisé en ce que**
- une culture d'algues est cultivée dans un bassin d'eau de mer, ladite eau de mer étant filtrée à 50micron ou moins, de sorte à enlever essentiellement quelconque présence de zooplancton,
- lesdits copépodes étant prêts pour élevage et ajoutés audit bassin,
- un nombre de substances nutritives étant ajoutées audit bassin afin de maintenir ladite culture d'algues en croissance de sorte à éviter l'effondrement de ladite culture d'algues, et
- ladite culture d'algues est maintenue en équilibre lorsqu'un état d'équilibre désiré a été atteint en contrôlant la densité desdits copépodes, en récoltant des quantités excédentes de copépodes et/ou contrôlant le contenu d'azote dans ledit bassin.

2. Procédé selon la revendication 1, **caractérisé en ce que** lesdites substances nutritives sont soit ajoutées par ajout d'eau d'entrée en forme de contenu naturel d'azote (ammoniaque et nitrate) dans la dite eau d'entrée ou directement au bassin en tant que liquide ou poudre dans quelconque autre forme riche en azote.

3. Procédé d'alimentation de larves de poisson avec une source de fourrage pour poisson marin susceptible d'être obtenu selon l'une quelconque des revendications précédentes, **caractérisé en ce que**
- lesdites larves de poisson sont placées dans un bassin d'alimentation de larves,
- lesdits copépodes dans ladite source de fourrage pour poisson marin ayant une gamme de taille en relation audites larves de poisson sont ajoutées audit bassin d'alimentation de larves afin d'obtenir une densité appropriée desdits copépodes dans ledit bassin d'alimentation de larves,
- ladite culture d'algues est ajoutée lors de la première alimentation audit bassin d'alimentation de larves pour garantir que la densité de ladite culture d'algues est adaptée pour maintenir des conditions d'alimentation optimales pour lesdits copépodes et pour satisfaire aux exigences concernant les larves d'algues,
- ladite eau dans ledit bassin d'alimentation de larves est filtrée en dirigeant ladite eau dudit bassin d'alimentation de larves à travers un système de bio-filtre et en retournant l'eau filtrée audit bassin d'alimentation de larves, par lequel lesdits bassins d'alimentation de larves sont fournis avec de nouvelles bactéries non pathogènes, et les produits toxiques d'ammoniaque sont enlevés dudit bassin d' alimentation de larves et le contenu d'azote est contrôlé dans ledit bassin, et
- le niveau d'oxygène dans ledit bassin de larves de poisson et maintenu à un niveau entre 80 et 110% de saturation.

4. Procédé selon les revendications 3 à 4, **caractérisé en ce que** lesdites larves de poisson sont choisies entre des espèces de poisson; qui dans leur état larvaire sont incapables de synthétiser l'acide gras 22:6n-3, et sont dépendantes de petites proies vivantes inférieures à 700 micron.

5. Procédé selon la revendication 3 à 4, **caractérisé en ce que** lesdites larves de poisson ont un âge minimum d'un jour suivant éclosion et un poids maximum d'approximativement 10 mg en poids sec.

6. Méthode selon les revendications 3 à 4, **caractérisé en ce que** ladite méthode comprend en outre l'étape additionnelle d'enlever lesdites larves de poisson dudit bassin d'alimentation de larves pour un affourage supplémentaire, comme par exemple l'alimentation sèche quand lesdites larves de poisson ont une taille et/ou un âge permettant une telle alimentation.

7. Système d'aquaculture pour la production de poisson cultivé en utilisant une source de fourrage pour poisson marin comprenant des copépodes, **caractérisé en ce que**
- une culture d'algues est élevée dans de l'eau de mer dans un bassin, ladite eau de mer étant filtrée à 50 micron ou moins de sorte à éliminer essentiellement quelconque présence de zooplancton,
- lesdits copépodes sont prêts pour l'élevage et ajoutés audit bassin,
- un nombre de substances nutritives sont ajoutées audit bassin afin de maintenir ladite culture d'algues en croissance de sorte à prévenir l'effondrement de ladite culture d'algues, et
- ladite culture d'algues est maintenue en équilibre quand un état d'équilibre désiré a été atteint en contrôlant la densité desdits copépodes en récoltant les quantités excédantes desdits copépodes et/ou en contrôlant le contenu d'azote dans ledit bassin, et où lesdites substances nutritives sont soit ajoutées par ajout d'eau de mer d'entrée, en forme de contenu naturel d'azote (ammoniaque et nitrate) dans ladite eau de mer d'entrée, ou directement au bassin en tant que liquide ou poudre dans quelconque autre forme riche en azote où ladite source de fourrage pour poisson marin est obtenue par un ensemble de source de fourrage pour poisson et chacune desdites sources des fourrage pour poisson en termes de temps de démarrage est séparée en relation aux autres desdites sources de fourrage pour poisson, et où lesdites larves de poisson sont alimentées avec ladite source de fourrage pour poisson marin, obtenue par une méthode d'alimentation de larves de poisson avec une source de fourrage pour poisson marin, où
- lesdites larves de poisson sont placées dans des bassins d'alimentation de larve,
- lesdits copépodes dans ladite source d' alimentation pour poisson marin ayant une gamme de taille en relation audites larves de poisson sont ajoutées audit bassin d'alimentation desdites larves afin d'obtenir une densité appropriée desdits copépodes dans ledit bassin d'alimentation de larves,
- ladite culture d'algues est ajoutée audit bassin d'alimentation de larves autour de la première alimentation pour assurer que la densité de ladite culture d'algues est appropriée pour maintenir des conditions optimales d' alimentation pour lesdits copépodes et satisfaire les conditions par rapport aux larves et algues,
- ladite eau dans ledit bassin d'alimentation de larves est filtrée en dirigeant ladite eau depuis ledit bassin d'alimentation de larves à travers un système de biofiltre et en retournant l'eau filtrée audit bassin d'alimentation de larves, par lequel lesdits bassins d'alimentation de larves sont fournis avec des nouvelles bactéries non pathogènes, et les produits toxiques d'ammoniaque sont enlevés dudit bassin d'alimentation de larves, et
- le niveau d'oxygène dans ledit bassin de larves de poisson est maintenu à un niveau entre 80 et 110% de saturation, et ledit système comprend un nombre de récipients comprenant lesdites larves de poisson, chacun desdits récipients comprenant des larves de poisson et l'eau dans chacun desdits récipients est filtrée en dirigeant l'eau depuis ledit récipient à travers un système de biofiltre et en retournant l'eau filtrée à un ou plusieurs desdits récipients, où les récipients sont approvisionnés avec des nouvelles bactéries non pathogènes, et où les produits toxiques d'ammoniaque sont enlevés des récipients, et où lesdits copépodes sont utilisés comme fourrage pour poisson marin dans un récipient de larves de poisson spécifique de sorte à assurer que lesdites larves de poisson dans ledit récipient de larves de poisson spécifique sont alimentées avec des copépodes ayant atteint une étape de vie et/ou taille qui est appropriée pour alimenter lesdites larves de poisson spécifique.

8. Système d'aquaculture selon la revendication 7, **caractérisé en ce que** ledit système comprend en autre des systèmes pour ajouter des rotifères et des artémis.

9. Système d'aquaculture selon la revendication 7 à 8, **caractérisé en ce que** ledit biofiltre est structuré de façon à ce que ladite eau sera en mesure de passer à travers un milieu, avec une surface de plus de 50 m² pro m³ sur lequel milieu un film bactérial constitué par des bactéries hétérotrophes et nitrifiantes est attaché, et ledit biofiltre est équipé d'un écran pour enlever les particules ayant une taille supérieure à 50 micron avant que ladite eau ré-entre dans ledit bassin d'alimentation de larves.
